(19) Europäisches Patentamt
European Patent Office
Office européen des brevets

(11) **EP 3 034 219 B1**

(12) **EUROPÄISCHE PATENTSCHRIFT**

(45) Veröffentlichungstag und Bekanntmachung des Hinweises auf die Patenterteilung:
**08.05.2019  Patentblatt 2019/19**

(51) Int Cl.:
***B23F 5/16*** *(2006.01)*

(21) Anmeldenummer: **14198168.8**

(22) Anmeldetag: **16.12.2014**

(54) **Wälzschälverfahren mit Mehrschnittstrategie**

Skiving method with multiple cut strategy

Procédé de décolletage en développante à stratégie à plusieurs coupes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016  Patentblatt 2016/25**

(73) Patentinhaber: **Klingelnberg AG**
**8050 Zürich (CH)**

(72) Erfinder: **Vogel, Olaf**
**76275 Ettlingen (DE)**

(74) Vertreter: **Heusch, Christian**
**Ant-IP GmbH**
**Kirchplatz 2**
**82387 Antdorf (DE)**

(56) Entgegenhaltungen:
**EP-A1- 2 596 893       WO-A1-2012/159942**
**DE-A1-102008 037 514   DE-A1-102014 201 110**

EP 3 034 219 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Gegenstand der Erfindung ist ein Verfahren zum Wälzschälen einer Verzahnung.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

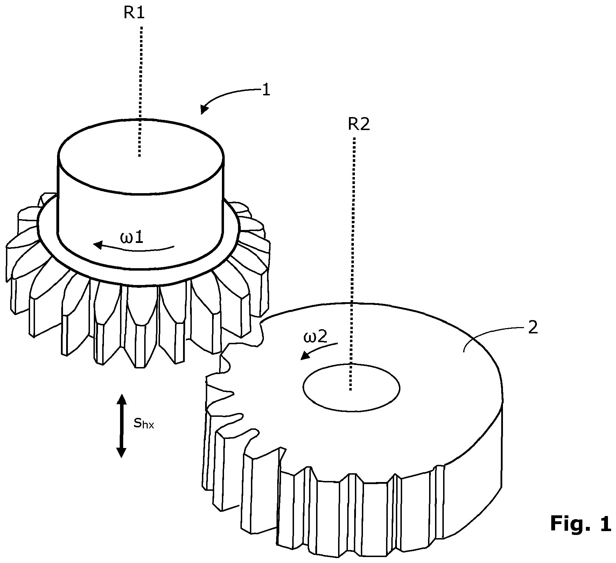

Das Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Diese Rotationsbewegungen sind durch die Bezugszeichen $\omega_1$ und $\omega_2$ dargestellt. Das Stosswerkzeug 1 macht zusätzlich zu der Drehbewegung eine Hubbewegung, die in Fig. 1 durch den Doppelpfeil $s_{hx}$ bezeichnet ist, und nimmt bei dieser Hubbewegung Späne vom Werkstück 2 ab.

Aus dem Dokument DE102014201110 A1 ist ein Verfahren zum Bearbeiten eines Zahnrads bekannt, das in diesem Dokument als Schälen bezeichnet wird. Es kommt eine Mehrschnittstrategie zur Anwendung, wie folgt. In einem ersten Schneidprozess wird ein Werkzeug bis zu einer gewissen Tiefe in das Werkstück eingetaucht. Die Zahnflanken werden jedoch nicht entlang der vollen Zahnbreite fertig bearbeitet. Die Schneidtiefe wird kurz vor dem Erreichen des Endes der Zahnbreite reduziert. Das Werkzeug schneidet vorwärts mit einem Zahn, der an der Unterseite des Werkzeugs ausgebildet ist. In einem zweiten Schneidprozess wird das Werkzeug in umgekehrter Richtung gedreht, um an dem Werkstück die Zahnflanken im Endbereich fertig zu bearbeiten. In dem zweiten Schneidprozess schneidet das Werkzeug nun rückwärts mit einem Zahn, der an der Oberseite des Werkzeugs ausgebildet ist. An dem Werkzeug, respektive an der Werkzeugspindel ist eine Umschaltachse Z vorgesehen. Die erste Stellung unterscheidet sich von der zweiten Stellung lediglich durch unterschiedliche Neigungswinkel. Ausserdem wird eine Drehrichtungsumkehr vorgenommen. Der Achskreuzwinkel wird gemäß DE102014201110 A1 im Rahmen der Mehrschnittstrategie nicht geändert.

Vor einiger Zeit wurde ein Verfahren erneut aufgegriffen, das als Wälzschälen bezeichnet wird. Die Grundlagen sind circa 100 Jahre alt.

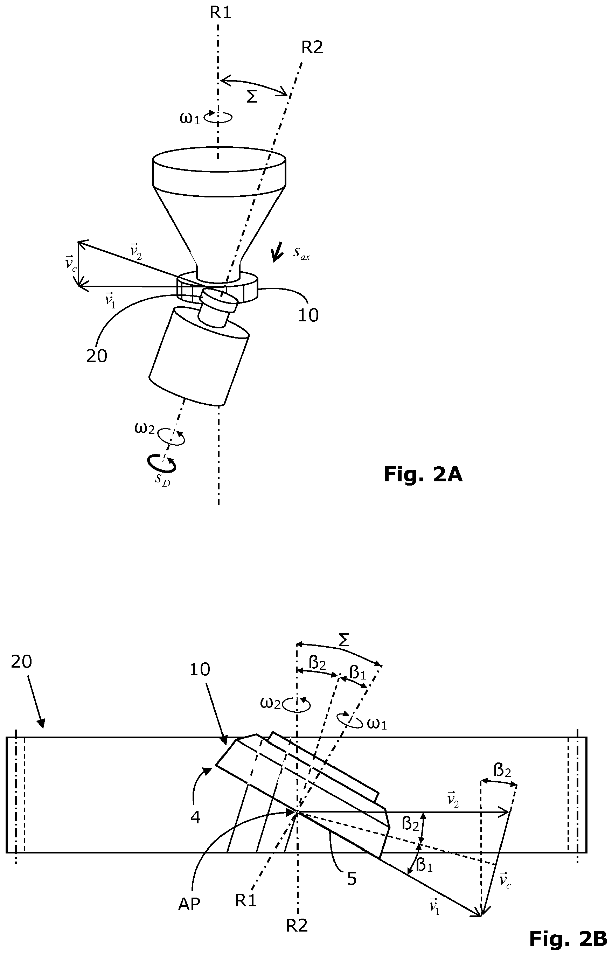

Beim Wälzschälen wird, wie in Fig. 2A gezeigt, ein Achskreuzwinkel $\Sigma$ zwischen der Rotationsachse R1 des Wälzschälwerkzeugs 10 (auch als Schälrad bezeichnet) und der Werkstück-Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Umso größer der Achskreuzwinkel $\Sigma$ betragsmäßig ist, umso mehr nimmt der für die Bearbeitung des Werkstücks 20 notwendige translatorische Bewegungsanteil zu. Er bewirkt nämlich eine Bewegungskomponente der Flankenschneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub $s_{ax}$ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel $\Sigma$ der Rotationsachsen R1 und R2 beeinflusst. Der Achskreuzwinkel $\Sigma$ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 2A z.B. anhand der Winkelgeschwindigkeiten $\omega_1$ und $\omega_2$ zu erkennen ist. Das zylindrische Werkzeug 10 ist zur Erzeugung kinematischer Freiwinkel vom Werkstück 20 weggeneigt.

Hinzu kommen weitere Relativbewegungen. Es ist der bereits erwähnte Axialvorschub $s_{ax}$ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Werkstück-Rotationsachse R2. Die Richtung dieser Bewegung des Werkzeugs 10 ist in Fig. 2A mit $s_{ax}$ gekennzeichnet. Falls am Werkstück 20 eine Schrägverzahnung erwünscht ist (d.h. Schrägungswinkel $\beta_2 \neq 0$), wird dem Axialvorschub $s_{ax}$ ein Differentialvorschub $s_D$ überlagert, welcher, wie in Fig. 2A gekennzeichnet, einer zusätzlichen Drehung des Werkstücks 20 um die Werkstück-Rotationsachse R2 entspricht. Der Differentialvorschub $s_D$ und der Axialvorschub $s_{ax}$ werden am Auslegungspunkt AP derart rechnerisch aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub $s_{rad}$ eingesetzt werden, um etwa die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den effektiven Achskreuzwinkel $\Sigma_{eff}$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Der Betrag der Schnittgeschwindigkeit $v_c$ des Wälzschälprozesses kann durch den Achskreuzwinkel $\Sigma$ und die Drehzahl im Schraubradersatzgetriebe verändert werden. Der, wie bereits erwähnt, relativ langsame Axialvorschub $s_{ax}$ hat beim Wälzschälverfahren nur einen kleinen Einfluss auf die Schnittgeschwindigkeit $v_c$, der vernachlässigt werden kann. Deshalb ist der Axialvorschub $s_{ax}$ in dem Vektordiagram mit den Vektoren $\vec{v}_1$, $\vec{v}_2$ und $\vec{v}_c$ in Fig. 2A nicht berücksichtigt.

In Fig. 2B ist das Wälzschälen einer Außenverzahnung eines Werkstücks 20 mit einem ungeneigten konischen Wälzschälwerkzeug 10 gezeigt. In Fig. 2B sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrägungswinkels $\beta_1$ des Werkzeugs 10 und der Schrägungswinkel $\beta_2$ des Werkstücks 20 gezeigt. Der Schrägungswinkel $\beta_2$ ist hier ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. In dem Auslegungspunkt AP berühren sich die Wälzkreise des Schraubwälzersatzgetriebes.

Beim Wälzschälen kommt ein Werkzeug 10 zum Einsatz, das mindestens eine geometrisch bestimmte Flankenschneide umfasst. Die Flankenschneide/Flankenschneiden sind in Fig. 2A und Fig. 2B nicht gezeigt. Die Form und Anordnung der Flankenschneiden gehören zu denjenigen Aspekten, die in der Praxis bei einer konkreten Auslegung berücksichtigt werden müssen.

Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt.

Beim Wälzschälen werden die (Zahn-)Lücken typischerweise in mehreren Schnitten bezüglich der Zahntiefe erzeugt. Man spricht daher auch von einer Mehrschnittstrategie. Die rechnerische Auslegung des Wälzschälwerkzeugs erfolgt hierbei im Wesentlichen mit Blick auf optimale Spanbedingungen für den finalen Schnitt, bei dem die endgültige Flankenoberfläche erzeugt wird.

Üblicherweise werden die einzelnen Schnitte in unterschiedlichen Zahntiefen durch eine entsprechende Zustellung des Wälzschälwerkzeugs in Zahntiefenrichtung ausgeführt. Beim Wälzschälen mit einem ungeneigten Wälzschälwerkzeug entspricht die Zustellung einer reinen Änderung des Achsabstandes zwischen der Achsen R1 und R2.

Eigene Untersuchungen des Wälzschälens mit Mehrschnittstrategie haben gezeigt, dass sich für die einzelnen Schnitte (bei den unterschiedlichen Zustelltiefen) unterschiedliche Span- bzw. Schnittbedingungen ergeben. Das ist jedoch insbesondere der Fall, falls beim Wälzschälen mit Mehrschnittstrategie dasselbe Wälzschälwerkzeug für die einzelnen Schnitte eingesetzt wird. Die Span- bzw. Schnittbedingungen sind unterschiedlich, da sich insbesondere der jeweils aktive Wälzkreis am Werkstück gegenüber der Auslegungsposition für den finalen Schnitt verschiebt.

Aus dem Dokument DE 102008037514 A1 ist ein Wälzschäl-Verfahren bekannt, das mit einer radialen Austauchbewegung und/oder mit einer radialen Eintauchbewegung arbeitet.

Aus dem Dokument EP2596893 A1 ist ein Wälzschäl-Verfahren bekannt, das auf einer Mehrschnittstrategie beruht. Im Rahmen dieser Mehrschnittstrategie wird mit zwei unterschiedlichen Achskreuzwinkeln gearbeitet. Das Wälzschäl-Verfahren des Dokuments EP2596893 A1 beruht auf einem Semi-Completing-Ansatz, bei dem die Zahnflanken einer Lücke in verschiedenen Verfahrensschritten bearbeitet werden.

Die Span- bzw. Schnittbedingungen ändern sich hierbei sogar signifikant, wie genaue Simulationen ergeben haben. Bei dem Einsatz geneigter Wälzschälwerkzeuge kann es im Extremfall sogar dazu kommen, dass mit einem für den finalen Schnitt optimalen Wälzschälwerkzeug bei einer Bearbeitungstiefe von etwa 25% nicht kollisionsfrei geschält werden kann.

Diese Unterschiede der Spanbildungsbedingungen bei den verschiedenen Schnitttiefen führen nicht nur zu unterschiedlich starkem Verschleiß am Wälzschälwerkzeug, sondern sie können auch einen Einfluss auf die Qualität der erzeugten Zahnflanken haben.

Weiterhin ist für das Wälzschälen charakteristisch, dass der von der einlaufenden Zahnflanke eF abgetragene Teil des Spanes dünner ausfällt als der von der auslaufenden Zahnflanke aF abgetragene Teil des Spanes. Auch diese Verfahrenseigenheit des Wälzschälens kann bei einer Mehrschnittstrategie problematisch sein.

Es werden daher Lösungen gesucht, die es ermöglichen eine optimale Oberflächenqualität der Zahnflanken zu erzielen und den ungleichmäßigen Verschleiß am Wälzschälwerkzeug zu verhindern.

Vor allen geht es darum die Standzeit der Wälzschälwerkzeuge zu verbessern. Durch einen reduzierten Verschleiß wird das Wälzschälverfahren wirtschaftlicher, da die Herstellkosten beim Verzahnen von Werkstücken wesentlich durch die Werkzeugstandzeiten beeinflusst werden.

Aufgabe der vorliegenden Erfindung ist es daher, ein entsprechendes Wälzschälverfahren zum Wälzschälbearbeiten der Zahnflanken eines Zahnrades oder anderer periodischer Strukturen bereitzustellen.

Diese Aufgabe wird gemäß der vorliegenden Erfindung durch ein Verfahren gelöst, das hier als Wälzschälverfahren mit Mehrschnittstrategie und Werkzeugschwenken bezeichnet wird. Dabei ist die Freiheit bei der Gestaltung des Schnittprozesses, genauer gesagt der Spanbildungsbedingungen, der Fokus der erfindungsgemäßen Lösung.

D.h., die Aufgabe wird gemäß der vorliegenden Erfindung durch ein Wälzschälverfahren gelöst, das auf dem Prinzip der Mehrschnittstrategie aufbaut, wobei durch ein schrittweises Verstellen des effektiven Achskreuzwinkels die Spanbildung am Werkzeug verbessert und die Standzeit des Werkzeugs erhöht wird.

Das Wälzschälverfahren der Erfindung lässt sich im Zusammenhang mit der Herstellung rotationssymmetrischer, periodischer Strukturen, wie Verzahnungen und dergleichen, einsetzen.

Die Rotationsachse des Werkzeugs ist beim erfindungsgemäßen Wälzschälen stets windschief gegenüber der Rotationsachse des Werkstücks angestellt, d.h. der Achskreuzwinkel $\Sigma$ ist stets ungleich Null.

Gemäß Erfindung kommt ein entsprechend ausgelegtes Wälzschälwerkzeug zum Einsatz, das für den finalen Schnitt ausgelegt und optimiert wurde. Um jedoch im Rahmen der Mehrschnittstrategie auch bei den Verfahrensschritten, die vor dem finalen Schnitt erfolgen, bessere Schnittbedingungen zu erzielen, wird der effektive Achskreuzwinkel Schritt für Schritt angepasst.

Bei einer Mehrschnittstrategie, die eine erste Wälzschälbearbeitung des Werkstücks gefolgt von einer finalen zweiten Wälzschälbearbeitung des Werkstücks umfasst, wird für die erste Wälzschälbearbeitung ein anderer effektiver Achskreuzwinkel vorgegeben als für die finale zweite Wälzschälbearbeitung. D.h. der effektive Achskreuzwinkel wird vor dem Durchführen der finalen zweiten Wälzschälbearbeitung verstellt.

Falls die Mehrschnittstrategie mehr als nur zwei Schritte umfasst, so können auch mehr als nur zwei unterschiedliche effektive Achskreuzwinkel vorgegeben werden.

Vorzugsweise wird rechnerisch - z.B. unmittelbar vor dem Ausführen des Wälzschälverfahrens der Erfindung - eine Anpassung ermittelt. Dahinter steckt für nichtgeneigte Wälzschälwerkzeuge der mathematische Zusammenhang zwischen den Wälzkreisdurchmessern, dem Achskreuzwinkel und dem Achsabstand. Wird der Achsabstand geändert und fixiert, was bei einer Mehrschnittstrategie der Fall ist, so kann durch eine Änderung des effektiven Achskreuzwinkels die Wälzkreislage modifiziert werden.

Gemäß Erfindung geht es um ein Verfahren zum Wälzschälen mindestens eines Werkstücks mit rotationssymmetrischer, periodischer Struktur unter Einsatz des Wälzschälwerkzeugs. Es werden die folgenden Schritte ausgeführt:

- Bereitstellen des Werkstücks (z.B. eines Rohlings),
- Bereitstellen des Wälzschälwerkzeugs, das mehrere Schneidzähne aufweist,

  - Vorgeben eines ersten effektiven Achskreuzwinkels des Wälzschälwerkzeugs in Bezug zum Werkstück,
  - Ausführen einer ersten Wälzschälbearbeitung des Werkstücks, wobei während der ersten Wälzschälbearbeitung das Wälzschälwerkzeug bis zu einer ersten Zustelltiefe in das Werkstück eindringt und Flanken der periodischen Struktur des Werkstücks vorbearbeitet werden,
  - Vorgeben eines zweiten effektiven Achskreuzwinkels des Wälzschälwerkzeugs in Bezug zum Werkstück,
  - Ausführen einer zweiten Wälzschälbearbeitung des Werkstücks, wobei während der zweiten Wälzschälbearbeitung das Wälzschälwerkzeug bis zu einer endgültigen Zustelltiefe in das Werkstück eindringt und die Flanken der periodischen Struktur des Werkstücks weiter bearbeitet werden, und

wobei sich der erste effektive Achskreuzwinkel von dem zweiten effektiven Achskreuzwinkel unterscheidet, wobei mit dem Verstellen des Achskreuzwinkels keine Drehrichtungsumkehr vorgenommen wird, und wobei es sich bei dem Verfahren um ein Mehrschnitt-Completing-Verfahren handelt, bei dem rechte und linke Zahnflanken einer Lücke des Zahnrads gleichzeitig bearbeitet werden.

Bei allen Ausführungsformen beinhaltet der Begriff "Vorgeben eines effektiven Achskreuzwinkels" auch das Nutzen dieses effektiven Achskreuzwinkels beim Ausführen der entsprechenden Wälzschälbearbeitung.

Es geht nicht bei allen Ausführungsformen darum, exakt dieselben Schnittbedingungen wie im finalen Schnitt zu erhalten, sondern vor allem die Schnittbedingungen der nicht-finalen Schnitte zu verbessern.

Mit der Änderung des effektiven Achskreuzwinkels kann auch eine Änderung des Neigungswinkels einhergehen.

Gemäß Erfindung muss im Zusammenhang mit dem Verstellen des Achskreuzwinkels keine Drehrichtungsumkehr vorgenommen werden.

Es ist hier anzumerken, dass die rotationssymmetrischen, periodischen Strukturen der Werkstücke nicht unbedingt symmetrische Zähne, bzw. symmetrische Zahnlücken, Nuten oder Rillen aufweisen müssen. Im Folgenden sind der Einfachheit halber Werkstücke mit symmetrischen Zähnen gezeigt und beschrieben. Die Erfindung lässt sich aber auch auf asymmetrische Strukturen anwenden.

Die Erfindung kann sowohl zum Bearbeiten von außen- und innenliegenden periodischen Strukturen und insbesondere auch zum Bearbeiten von Außen- wie Innenverzahnungen eingesetzt werden.

Kennzeichnend für das Wälzschälen der Erfindung ist bei allen Ausführungsformen, dass die relativen Bewegungsabläufe (Relativbewegungen genannt) zwischen Werkstück und Werkzeug so vorgegeben und ausgeführt werden, dass am Werkstück fortschreitend Material abgetragen wird bis die Zähne oder die anderen periodischen Strukturen ausgebildet (bei einer Weichbearbeitung aus dem Vollen) oder fertig bearbeitet (bei einer Hartbearbeitung) sind.

Die Erfindung eignet sich unter anderem für das Vorverzahnen, daß heißt für die Bearbeitung aus dem Vollen. Bei dem erfindungsgemäßen Vorverzahnen werden während der ersten Wälzschälbearbeitung unter Beibehaltung des ersten Achskreuzwinkels die Flanken vorbearbeitet und während der zweiten Wälzschälbearbeitung nach dem Einstellen eines zweiten effektiven Achskreuzwinkels werden alle Flanken fertig bearbeitet.

Bei dem erfindungsgemäßen Wälzschälen handelt es sich um ein kontinuierliches, spanabhebendes Verfahren.

Gemäß Erfindung kann der relativen Vorschubbewegung des Wälzschälwerkzeugs in jeder Bearbeitungsphase eine radiale Bewegung überlagert sein, um z.B. die Balligkeit der Zähne, gemäß der technischen Lehre der deutschen Patentanmeldung DE3915976 A1, zu beeinflussen.

Während des Wälzschälens vollführt das sich drehende Werkzeug eine axiale Vorschubbewegung in Bezug auf das sich drehende Werkstück in Richtung der Werkstück-Rotationsachse, wobei diese axiale Vorschubbewegung gleichsinnig oder gegenläufig zur Schnittrichtung verläuft.

Die Werkzeuge gemäß Erfindung können für alle Ausführungsformen als sogenannte Vollwerkzeuge ausgelegt sein, d.h. es handelt sich um Werkzeuge, die im Wesentlichen einstückig ausgeführt sind. Bei den Vollwerkzeugen sind die Schneidzähne ein integraler Bestandteil des Werkzeugs.

Besonders bevorzugt sind für alle Ausführungsformen der Erfindung Messerkopfwerkzeuge (hier Stabmesser-Werkzeuge genannt), die einen scheiben-, ring- oder tellerartigen Messerkopfgrundkörper haben, der mit Messer- oder Schneideinsätzen, vorzugsweise in Form von Stabmessern, bestückt ist. Auch möglich sind Ausführungsformen der Erfindung, die als Schneidplatten-Werkzeuge ausgelegt sind, die einen scheiben-, ring- oder tellerartigen Messerkopfgrundkörper haben, der mit Schneidplatten bestückt ist.

Das Verfahren der Erfindung kann nicht nur unter Einsatz von Außenwerkzeugen sondern auch unter Einsatz von Innenwerkzeugen ausgeführt werden.

Das erfindungsgemäße Verfahren kann sowohl im Zusammenhang mit einer Trocken- als auch einer Nassbearbeitung durchgeführt werden.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

**FIG. 1** zeigt eine schematische Darstellung eines Stossrads mit zylindrischer Außenkontur im Eingriff mit einem außenverzahnten Werkstück beim Wälzstossen;

**FIG. 2A** zeigt eine schematische Darstellung eines geradverzahnten Schälrads mit zylindrischer Außenkontur im Eingriff mit einem außenverzahnten Werkstück beim Wälzschälen;

**FIG. 2B** zeigt eine schematische Darstellung eines schrägverzahnten Schälrads mit konischer Außenkontur im Eingriff mit einem außenverzahnten Werkstück beim Wälzschälen in einer Achskreuzprojektion;

**FIG. 3A** zeigt eine stark schematisierte und nicht proportionale Schnittdarstellung des ersten erfindungsgemäßen Verfahrensschritts eines 3-Schritt Verfahrens;

**FIG. 3B** zeigt eine stark schematisierte und nicht proportionale Schnittdarstellung des zweiten erfindungsgemäßen Verfahrensschritts eines 3-Schritt Verfahrens;

**FIG. 3C** zeigt eine stark schematisierte und nicht proportionale Schnittdarstellung des dritten (finalen) erfindungsgemäßen Verfahrensschritts eines 3-Schritt Verfahrens;

**FIG. 4A** zeigt das Ergebnis einer Simulation der Relativbewegung eines Schneidzahns eines Wälzschälwerkzeugs im Material eines Werkstücks beim Gegenlauf-Wälzschälen in einer ersten Momentaufnahme;

**FIG. 4B** zeigt eine zweite Momentaufnahme der Simulation, wobei sich der Schneidzahn des Wälzschälwerkzeugs im Material des Werkstücks gegenüber der Situation in Fig. 4A ein Stück weiter in Schnittrichtung nach links bewegt hat;

**FIG. 4C** zeigt eine dritte Momentaufnahme der Simulation, wobei sich der Schneidzahn des Wälzschälwerkzeugs im Material des Werkstücks gegenüber der Situation in Fig. 4B ein Stück weiter in Schnittrichtung nach links bewegt hat;

**FIG. 5** zeigt einen Abschnitt eines Werkstücks in einer Draufsicht, wobei die Position der Wanne beim Erzeugen einer Zahnlücke in stark schematisierter Form im Gegenlauf-Wälzschälen gezeigt ist;

**FIG. 6A** zeigt einen Abschnitt eines Werkstücks in einer Draufsicht, wobei die Position und Form der Wanne einem ersten Schritt eines konventionellen 3-Schritt-Wälzschälverfahren entspricht (die Figuren 6A - 6C zeigen typische Situationen für die Bearbeitung einer Innenverzahnung);

**FIG. 6B** zeigt einen Abschnitt des Werkstücks der Fig. 6A in einer Draufsicht, wobei die Position und Form der Wanne dem zweiten Schritt des konventionellen 3-Schritt-Wälzschälverfahrens entspricht;

**FIG. 6C** zeigt einen Abschnitt des Werkstücks der Fig. 6A in einer Draufsicht, wobei die Position und Form der Wanne dem dritten (finalen) Schritt des konventionellen 3-Schritt-Wälzschälverfahrens entspricht;

**FIG. 7A** zeigt einen Abschnitt eines Werkstücks in einer Draufsicht, wobei die Position und Form der Wanne dem ersten Schritt des erfindungsgemäßen Verfahrens entspricht, der auch in Fig. 3A gezeigt ist (die Figuren 7A - 7C zeigen typische Situationen für die Bearbeitung einer Innenverzahnung);

**FIG. 7B** zeigt einen Abschnitt eines Werkstücks in einer Draufsicht, wobei die Position und Form der Wanne dem zweiten Schritt des erfindungsgemäßen Verfahrens entspricht, der auch in Fig. 3B gezeigt ist;

**FIG. 7C** zeigt einen Abschnitt eines Werkstücks in einer Draufsicht, wobei die Position und Form der Wanne dem dritten (finalen) Schritt des erfindungsgemäßen Verfahrens entspricht, der auch in Fig. 3C gezeigt ist.

DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische, periodische Strukturen sind zum Beispiel Zahnräder (wie Stirnräder) mit Innen- oder Außenverzahnung. Es kann sich aber zum Beispiel auch um Bremsscheiben, Kupplungs- oder Getriebeelemente und dergleichen handeln. Insbesondere geht es um die Herstellung von Ritzelwellen, Schnecken, Elementen für Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

Da es bei der Erfindung im Wesentlichen um den bereits eingangs beschriebenen Achskreuzwinkel $\Sigma$ bzw.

des unmittelbar mit diesem im Zusammenhang stehenden effektiven Achskreuzwinkel $\Sigma_{eff}$ geht, wird im Folgenden eine Definition dieser Winkel und weiterer relevanter Größen gegeben. Hierbei kennzeichnet ein hochgestelltes i immer die Größe für den i-ten Schnitt mit $1 \leq i \leq k$, wobei für den finalen Schnitt i=k gilt.

| | |
|---|---|
| Achskreuzprojektion | Die Betrachtung von Werkstück und Wälzschälwerkzeug entlang des Gemeinlots der Rotationsachsen R1 und R2 von der Rotationsachse R2 in Richtung der Verzahnung wird als Achskreuzprojektion bezeichnet. Die Figur 2B zeigt beispielsweise eine Achskreuzprojektion. |
| Achskreuzwinkel | Der Achskreuzwinkel $\Sigma^i$ ist der betragsmäßig kleinere Winkel, der von den beiden Rotationsachsen R1 und R2 im i-ten Schnitt eingeschlossen wird. Er wird in der Achskreuzprojektion sichtbar. Es gilt<br>-90° < $\Sigma^i$ < 90°, $\Sigma^i \neq 0°$. Der Achskreuzwinkel $\Sigma^i$ ist vorzeichenbehaftet. |
| Wälzpunkt | Der Wälzpunkt $WP^i$ entspricht dem Berührpunkt der jeweiligen Wälzkreise mit den Durchmessern $d_{w2}^i$ und $d_{w1}^i$ von Werkstück bzw. Werkzeug. |
| Geschwindigkeitsvektoren | $\vec{v}_1^i$ ist der Geschwindigkeitsvektor am Wälzschälwerkzeug und $\vec{v}_2^i$ ist der |
| | Geschwindigkeitsvektor am Werkstück. Diese Geschwindigkeitsvektoren $\vec{v}_1^i$ und $\vec{v}_2^i$ sind für jeden der k Schnitte am zugehörigen Wälzpunkt $WP^i$ definiert. |
| Effektiver Achskreuzwinkel | Der effektive Achskreuzwinkel $\Sigma_{eff}^i$ im i-ten Schnitt ist der von den beiden Geschwindigkeitsvektoren $\vec{v}_2^i$ und $\vec{v}_1^i$ eingeschlossene Winkel gemäß<br><br>$$\cos(\Sigma_{eff}^i) = \frac{\vec{v}_2^i \cdot \vec{v}_1^i}{\left|\vec{v}_2^i\right|\left|\vec{v}_1^i\right|}.$$<br><br>Gemäss Erfindung gilt gilt -90° < $\Sigma_{eff}^i$ < 90°, $\Sigma_{eff}^i \neq 0°$.<br><br>Der effektive Achskreuzwinkel $\Sigma_{eff}^i$ ist wie der Achskreuzwinkel $\Sigma^i$ vorzeichenbehaftet.<br><br>Das Vorzeichen des effektiven Achskreuzwinkels $\Sigma_{eff}^i$ ist gleich dem Vorzeichen des Achskreuzwinkels $\Sigma^i$.<br><br>Für ungeneigte ($\delta^i = 0$) Wälzschälwerkzeuge ist der effektive Achskreuzwinkel $\Sigma_{eff}^i$ gleich dem Achskreuzwinkel $\Sigma^i$. Allgemein gilt<br><br>$$\cos\Sigma^i = \cos\Sigma_{eff}^i \cdot \cos\delta^i \quad [01]$$<br><br>mit dem Neigungswinkel $\delta^i$. |
| Achsabstand | Der Achsabstand $a^i$ im Schnitt i und die Wälzkreisdurchmesser stehen über die folgende Formel in Zusammenhang:<br><br>$$2a^i = (d_{w1}^i + d_{w2}^i \cdot \cos(\delta^i)) \cdot \sin(\Sigma_{eff}^i)/\sin(\Sigma^i)$$ |

Bei der konventionellen Mehrschnittbearbeitung wird die Bearbeitungstiefe für die einzelnen Schnitte durch die radiale Zustellung bezüglich des Werkstücks 50 hergestellt. Hierbei ändert sich die durch die Winkel $\Sigma$, $\Sigma_{eff}$ und $\delta$ bestimmte räumliche Orientierung der Schneidzähne 111 des Werkzeugs 100 oder der Werkzeugeinsätze des Werkzeugs 100 gegenüber des Werkstücks 50 nicht. D.h. die Winkel $\Sigma^i$, $\Sigma_{eff}^i$ und $\delta^i$ sind beim konventionellem Schälen für alle Schnitte gleich.

Bei einer Mehrschnittbearbeitung ändert sich aufgrund der unterschiedlichen radialen Zustellung auch der (vorzeichenfähige) Achsabstand $a$ zwischen Werkstückachse R2 und Werkzeugachse R1. D.h. die Abstände $a^i$ sind für jeden der k einzelnen Schnitte unterschiedlich. Bei der Arbeit mit einem ungeneigtem Werkzeug 100 ($\vartheta$ =0) entspricht die radiale Zustellung unmittelbar der Änderung des Achsabstandes a.

Falls der resultierende Schnittgeschwindigkeitsvektor im Wälzpunkt WP$^i$ des i-ten Schnittes wie für den finalen Schnitt (i=k) in Richtung der Lücke 52 des Werkstücks 50 zeigen soll, so muss die folgende allgemeine Bedingung erfüllt sein:

$$d_{w1}^i = -d_{w2}^i \cdot u \cdot \cos(\beta_{w2}^i) / \cos(\Sigma_{eff}^i - \beta_{w2}^i)$$

u ist das Übersetzungsverhältnis und $\beta_{w2}^i$ ist der Schrägungswinkel des Werkstücks 50 am Wälzkreisdurchmesser $d_{w2}^i$.

Für den leichter überschaubaren Fall einer Geradverzahnung ($\beta_{w2i}= \beta_2=0$) lautet der Zusammenhang

$$d_{w1}^i = -d_{w2}^i \cdot u / \cos(\Sigma_{eff}^i)$$

und die Formel für den Achsabstand aus obiger Tabelle vereinfacht sich zu

$$2a^i = d_{w1}^i \cdot (1 - \cos(\Sigma^i)/u) \cdot \sin(\Sigma_{eff}^i)/\sin(\Sigma^i) \quad [2].$$

Aus dieser Definition des Achsabstandes a$_i$ ist ersichtlich, dass sich beim konventionellen Mehrschnittwälzschälen mit einer Änderung des Achsabstandes a$_i$ aufgrund der Beibehaltung der räumlichen Orientierung der Schneidzähne 111 oder des Werkzeugeinsatzes der jeweils aktive Wälzkreisdurchmesser $d_{w1}^i$ des Werkzeugs 100 ändert.

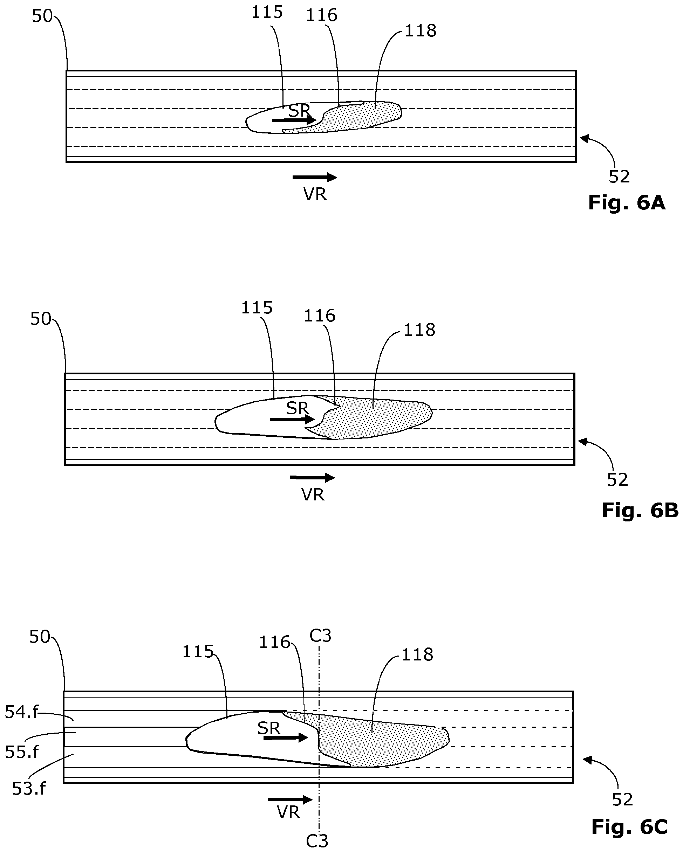

Bei der Bearbeitung einer Innenverzahnung ist der Achsabstand a$^i$ beim ersten Schnitt kleiner als der Achsabstand a$^k$ beim finalen Schnitt k, ebenso der aktive Wälzkreisdurchmesser des Werkzeugs 100. Diese Situation und die resultieren unterschiedlichen Schnittbedingungen sind in den Figuren 6A - 6C veranschaulicht. Beispielhaft wurde hierbei der finale Schnitt so ausgelegt, dass der Wälzkreisdurchmesser $d_{w1}^3 = d_{w1}$ dem Kopfkreisdurchmesser des Werkzeugs 100 entspricht, wodurch sich eine typisch durchgehend schräg verlaufende Erzeugendenlinie 116 ergibt, wie in Fig. 6C gezeigt. Im zweiten Schnitt (siehe Fig. 6B) berühren sich die Wälzkreise in etwa bei der Hälfte der aktuellen Bearbeitungstiefe von 66,6%, wodurch sich ein typischer Z-förmiger Verlauf der Erzeugendenlinie 116 einstellt. Im ersten Schnitt (siehe Fig. 6A) ergibt sich ein schräger Verlauf der Erzeugendenlinie 116 mit umgekehrter Orientierung wie in Fig. 6C.

Gemäß Erfindung geht es darum bei den einzelnen Schnitten gleichartige Verläufe der Erzeugendenlinien 116 zu erhalten. Um bei den nicht-finalen Schnitten (i < k) gleichartige Verläufe der Erzeugendenlinien 116 beim Einsatz desselben Werkzeugs 100 zu erhalten, werden gemäß Erfindung die Wälzkreisdurchmesser $d_{w1}^i$ in etwa konstant gehalten. Aus der obigen Formel [02] ist ersichtlich, dass dies durch Anpassung der räumlichen Orientierung des Schneidzahnes 111 oder des Werkzeugeinsatzes des Werkzeugs 100, d.h. der über Formel [01], die in der obigen Tabelle enthalten ist, in Zusammenhang stehenden Winkel $\Sigma^i$, $\Sigma_{eff}^i$ und $\vartheta$ erzielt werden kann.

Bevorzugt wird hierbei der Neigungswinkel $\vartheta$ konstant gehalten, so dass sich aus Formel [02] die Winkel $\Sigma^i$ und $\Sigma_{eff}^i$ ergeben. Dies muss aber nicht sein. Man könnte ebenso auch den Neigungswinkel $\vartheta$ in gewissen Grenzen für einen Teil oder für alle Schnitte ändern.

Die Erfindung beruht also darauf, dass zum Beispiel bei einem Zwei-Schnitt-Wälzschälverfahren mit zwei effektiven Achskreuzwinkeln (hier erster effektiver Achskreuzwinkel $\Sigma_{eff}^1$ und zweiter effektiver Achskreuzwinkel $\Sigma_{eff}^2$ genannt) gearbeitet wird, die sich deutlich unterscheiden. Bei einem k-Schnitt-Wälzschälverfahren gibt es k verschiedene effektive Achskreuzwinkel $\Sigma_{eff}^1$ bis $\Sigma_{eff}^k$. (k ist bei allen Ausführungsformen eine ganze Zahl grösser gleich 2).

Der Betrag der Differenz der verschiedenen effektiven Achskreuzwinkel $\Sigma_{eff}^i$ hängt von der jeweiligen Wälzkreislage ab.

Im Folgenden wird auch von einer "windschiefen" Lage der beiden Rotationsachsen R1 und R2 gesprochen, wenn der Achskreuzwinkel $\Sigma^i$ ungleich Null ist. Da der Achskreuzwinkel $\Sigma^i$ gemäss Erfindung stets ungleich Null ist, sind die beiden Rotationsachsen R1 und R2 bei allen Ausführungsformen windschief angestellt.

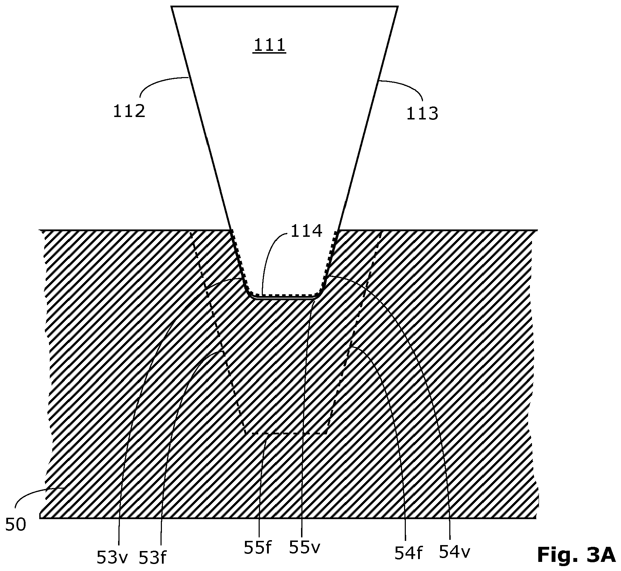

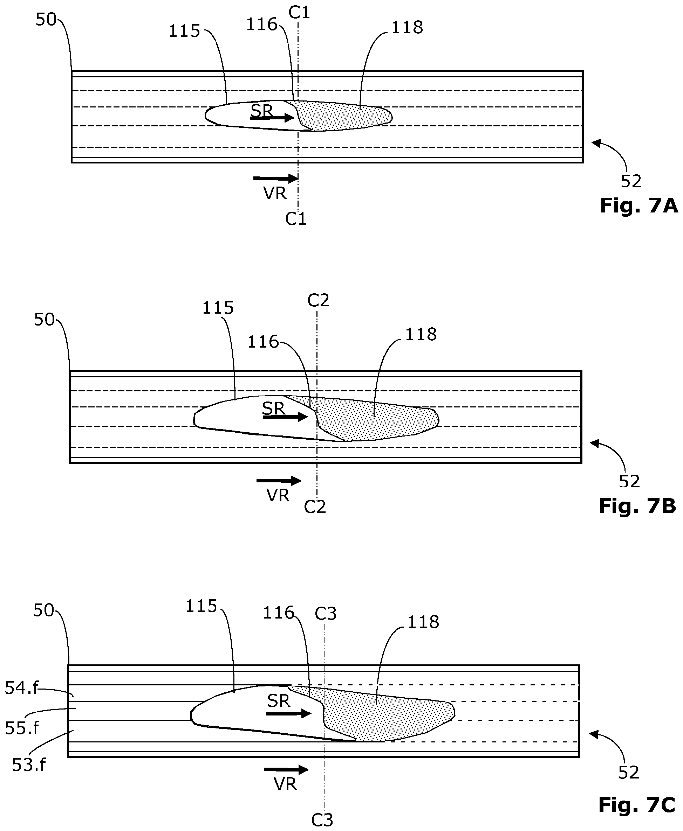

Grundlegende Aspekte des erfindungsgemäßen Verfahrens werden im Folgenden unter Bezugnahme auf die stark schematisierten Abbildungen Fig. 3A bis 3C sowie 7A bis 7C beschrieben. Diese Figuren dienen primär der Herleitung der erfinderischen Lösungen und sind als stark schematisierte Darstellungen zu verstehen. $\beta_{w1} = \beta_{w1}^{k}$ ist der Schrägungswinkel des Wälzschälwerkzeugs 100 am Wälzkreis und $\beta_{w2} = \beta_{w2}^{k}$ ist der Schrägungswinkel des Werkstücks 50 am Wälzkreis. Der effektive Achskreuzwinkel $\Sigma_{eff}$ erfüllt die Beziehung $\Sigma_{eff} = \beta_{w2} + \beta_{w1}$. Diese Werte werden typischerweise im Rahmen der rechnerischen Auslegung mit Blick auf optimale Spanbedingungen für den finalen Schnitt, bei dem die endgültige Flankenoberfläche erzeugt wird, ermittelt. Der finale Schnitt wird bei einem Verfahren mit k-Schritten im k-ten Schritt vorgenommen. D.h. bei der rechnerischen Auslegung wird quasi der effektive Achskreuzwinkel $\Sigma_{eff}^{k} = \Sigma_{eff}$ ermittelt.

Bisher wird bei allen k Schritten eines k-Schnitt-Wälzschälverfahrens mit demselben effektiven Achskreuzwinkel $\Sigma_{eff}^{k}$ gearbeitet. Bei der Erfindung wird bei allen oder bei einem Teil der k Schnitte je ein anderer effektiver Achskreuzwinkel vorgegeben und eingestellt. D.h. es wird vor allen Schritten oder vor einem Teil der Schnitte das Wälzschälwerkzeug 100 jeweils relativ zum Werkstück 50 in eine andere Position geschwenkt, um so einen vergleichbaren Verlauf der Erzeugendenlinie 116 zu erhalten.

Anhand der Figuren 3A bis 3C wird nun das Grundprinzip des erfindungsgemäßen Verfahrens zum Wälzschälen eines Werkstücks 50 gezeigt und beschrieben. Das Werkstück 50 hat eine rotationssymmetrische, periodische Struktur, die im Rahmen des erfindungsgemäßen Verfahrens fertig bearbeitet wird, oder an dem eine solche Struktur aus dem Vollen gefertigt wird.

Gemäß Erfindung werden ein Werkstück 50 und ein Wälzschälwerkzeug 100 bereitgestellt. Das Wälzschälwerkzeug 100 weist mehrere Schneidzähne 111 auf und es hat eine Rotationsachse R1. Gemäß Erfindung umfasst jeder der Schneidzähne 111 eine erste Flankenschneide 113 zum Schneiden der rechten Flanken 54, eine zweite Flankenschneide 112 zum Schneiden der linken Flanken 53 und eine Kopfschneide 114, die in einem Übergangsbereich zwischen der ersten Flankenschneide 113 und der zweiten Flankenschneide 112 liegt und den Zahnfuß 55 bearbeitet.

In den Fig. 3A bis 3C sind in stark vereinfachter Form die drei Schritte (k = 3) eines beispielhaften Verfahren der Erfindung gezeigt, wobei von dem Wälzschälwerkzeug 100 jeweils nur ein Schneidzahn 111 gezeigt ist. Außerdem ist nur eine Zahnlücke 52 gezeigt.

Hilfsweise sind folgende Linien eingezeichnet, um in den Fig. 3A bis 3C die Relativlagen des Wälzschälwerkzeugs 100 und des Werkstücks 50 erkennbar zu machen. Ein dicker, punktierter Linienzug zeigt in schematisierter Form diejenigen Abschnitte (Flanken) des Schneidzahns 111, die im gezeigten Moment Material am Werkstück 50 abtragen.

In Fig. 3A ist der 1. Schritt des Verfahrens gezeigt. Der Schneidzahn 111 dringt hier 33,33 % in das Material des Werkstücks 50 ein. Durch die beiden Flankenschneiden 112 und 113 wird Material an den Zahnflanken 53v, 54v sowie durch die komplette Kopfschneide 114 Material am Zahnfuß 55v abgetragen, wie durch den erwähnten punktierten Linienzug gezeigt. Durch den Zusatz "v" bei den Bezugszeichen 53v, 54v und 55v wird zum Ausdruck gebracht, dass diese Flanken und der Fuß in diesem Schnitt vorbearbeitet werden. In Fig. 3A ist auch die endgültige Lage der fertigen Flanken und des Zahnfusses durch einen strichlierten Linienzug und durch die Bezugszeichen 53f, 54f und 55f angedeutet. Fig. 3A zeigt in schematischer Form eine Schnittansicht entlang der Schnittlinie C1-C1 in der Fig. 7A.

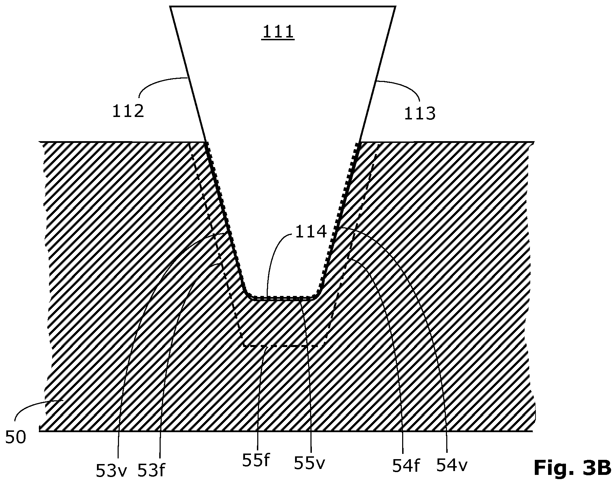

In Fig. 3B ist der 2. Schritt des Verfahrens gezeigt. Der Schneidzahn 111 dringt hier 66,6 % in das Material des Werkstücks 50 ein. Durch die beiden Flankenschneiden 112 und 113 wird Material an den Zahnflanken 53v, 54v sowie durch die komplette Kopfschneide 114 Material am Zahnfuß 55v abgetragen, wie durch den erwähnten punktierten Linienzug gezeigt. Durch den Zusatz "v" bei den Bezugszeichen 53v, 54v und 55v wird zum Ausdruck gebracht, dass diese Flanken in diesem Schnitt vorbearbeitet werden. Fig. 3B zeigt in schematischer Form eine Schnittansicht entlang der Schnittlinie C2-C2 in der Fig. 7B.

In Fig. 3B ist auch die endgültige Lage der fertigen Flanken und des Zahnfusses durch einen strichlierten Linienzug und durch die Bezugszeichen 53f, 54f und 55f angedeutet.

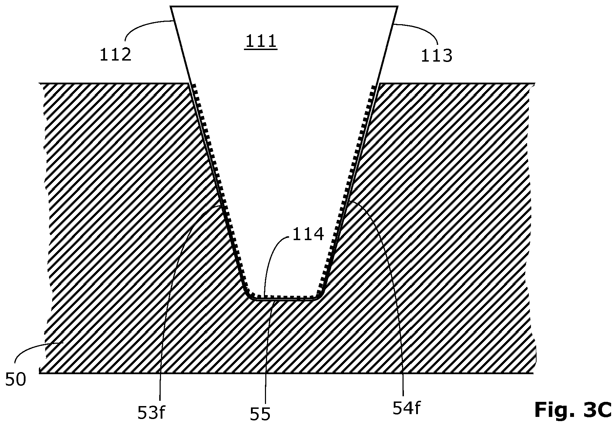

Fig. 3C zeigt den finalen Schnitt. In Fig. 3C wird durch die beiden Flankenschneiden 112 und 113 Material an den Zahnflanken 53f, 54f sowie durch die komplette Kopfschneide 114 Material am Zahnfuß 55f abgetragen, wie durch den erwähnten punktierten Linienzug gezeigt. Durch den Zusatz "f" bei den Bezugszeichen 53f, 54f und 55f wird zum Ausdruck gebracht, dass diese Flanken im finalen Schnitt fertig bearbeitet werden. Fig. 3C zeigt in schematischer Form eine Schnittansicht entlang der Schnittlinie C3-C3 in den Figuren 6C und 7C.

Man kann anhand der Figuren 3A bis 3C erkennen, dass es sich um ein Mehrschnitt-Completing-Verfahren handelt, da jeweils die rechten und die linken Flanken einer Lücke 52 gleichzeitig bearbeitet werden.

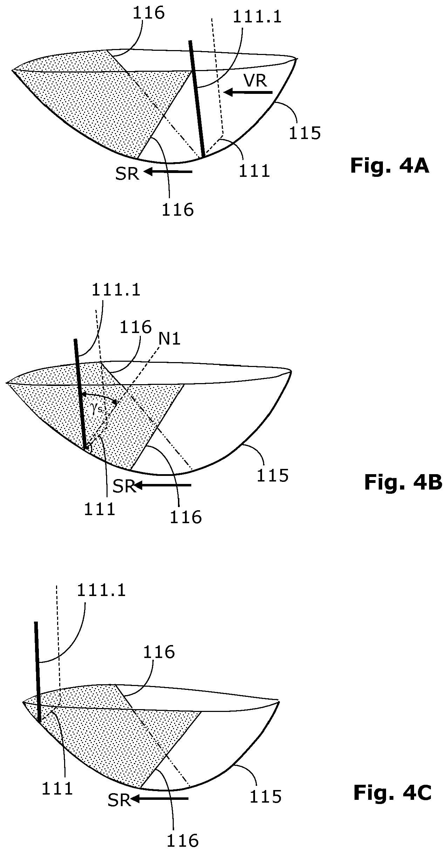

Die Bewegung eines Schneidzahns 111 eines Wälzschälwerkzeugs 100 durch das Material eines Werkstücks 50 beim Wälzschälen ist in den Figuren 4A bis 4C schematisch dargestellt. Die Figuren 4A bis 4C zeigen den effektiven Spanwinkelverlauf am Schneidenkopf, respektive am Schneidzahn 111 eines Wälzschälwerkzeugs 100, über den Schnittverlauf beim finalen Schnitt.

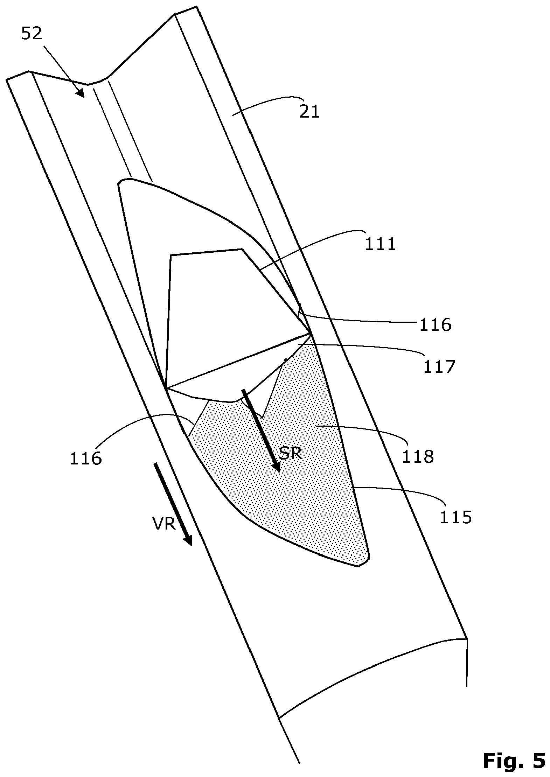

Aufgrund der Überlagerung von gekoppelten, d.h. miteinander synchronisierten Drehbewegungen des Wälzschälwerkzeugs 100 um die erste Rotationsachse R1 und des Werkstücks 50 um die zweite Rotationsachse R2, und von Vorschubbewegungen des Wälzschälwerkzeugs 100 relativ zum Werkstück 50, ergibt sich bei einer Aufzeichnung der Gesamtheit der Bahnpunkte einer Schneide eine Art Wannen- oder Trogform, wie in den Figuren 4A bis 4C und 5 gezeigt. Die entsprechende Wanne ist in den Figuren 4A bis 4C und 5 mit dem Bezugszeichen 115 gekennzeichnet.

In Fig. 4B ist der effektive Spanwinkel $\gamma_s$ am Schneidenkopf skizzenhaft eingezeichnet, welcher im dargestellten Moment negativ ist. Der effektive Spanwinkel $\gamma_s$ entspricht in der gewählten projizierten Darstellung in etwa dem Winkel zwischen der Spanfläche der Schneide 111.1 und der Normalen N1 im Berührpunkt zwischen Spanfläche und Wanne 115.

Fig. 4A zeigt die Relativbewegung des Schneidzahns 111 des Wälzschälwerkzeugs 100 im Material des Werkstücks 50 in einer ersten Momentaufnahme. Die Orientierung und Lage der Schneide 111.1 des Schneidzahns 111 ist durch einen dicken Strich dargestellt. Die Wanne 115 ergibt sich aus der Gesamtheit der in der Lücke 52 des Werkstücks 50 liegenden Bahnpunkte der Schneide 111.1 des Schneidzahns 111 für einen Eingriff des Schneidzahns 111 in diese Lücke 52. Der darauffolgende Eingriff eines weiteren Schneidzahns (dies kann derselbe oder ein anderer Schneidzahn des Werkzeugs 100 sein) erzeugt ebenso eine Wanne 115, welche auf Grund des Axialvorschubs und des daran gekoppelten Differentialvorschubs in axialer Richtung innerhalb der Lücke 52 versetzt ist. Die Wanne 115 bewegt sich also während des Wälzschälens schrittweise (zumindest virtuell) durch das Material des Werkstücks 50. Fig. 4A zeigt eine Linie 116, die die Wanne 115 in einen linken und einen rechten Abschnitt unterteilen. Der verdeckte Teil der Linie 116 ist strichpunktiert gezeigt. Die Linie 116 grenzt die Überlagerung von zwei Wannen voneinander ab, welche sich in ihrer Position um den Vorschub zwischen zwei unmittelbar aufeinanderfolgenden Schneidzahneingriffen unterscheiden. D.h. die Linie 116 kennzeichnet die Schnittkurve der beiden Wannen. Für unendlich kleinen Axialvorschub entspricht diese Schnittkurve der sogenannten Erzeugendenlinie. Die gesamte Zahnlücke 52 kann man sich als Menge solcher Erzeugendenlinien denken, die in Vorschubrichtung VR durch das Material des Werkstücks 50 wandern. Im Wälzschäl-Bearbeitungsprozess mit axialem Vorschub $s_{ax}$ wird durch die bewegte Schneide 111.1 nur im Bereich ab der Erzeugendenlinie 116 (d.h. im gezeigten Beispiel links von der Erzeugendenlinie 116) Material am Werkstück 50 abgetragen. Dieser Bereich wo der Materialabtrag stattfindet, ist in den Figuren 4A bis 4C grau dargestellt. Im weißen Bereich der Wanne 115, d.h. in Schnittrichtung SR betrachtet vor der Erzeugendenlinie 116 (d.h. im gezeigten Beispiel rechts von der Erzeugendenlinie 116), wurde das Material bereits durch den vorherigen Werkzeugeingriff abgetragen.

Fig. 4B zeigt eine zweite Momentaufnahme der Simulation, wobei sich der Schneidzahn 111 des Wälzschälwerkzeugs 100 im Material des Werkstücks 50 gegenüber der Situation in Fig. 4A ein Stück weiter nach links in Schnittrichtung SR bewegt hat.

Fig. 4C zeigt eine dritte Momentaufnahme der Simulation, wobei sich der Schneidzahn 111 des Wälzschälwerkzeugs 100 im Material des Werkstücks 50 gegenüber der Situation in Fig. 4B noch ein Stück weiter nach links in Schnittrichtung SR bewegt hat.

Fig. 5 zeigt einen Abschnitt eines Werkstücks 50 in einer Draufsicht, wobei die Position der Wanne 115 beim Durchlaufen einer Zahnlücke 52 in stark schematisierter Form gezeigt ist. Anhand von Fig. 5 ist zu erkennen, wie die Spanfläche 117 eines Schneidzahns 111 in der Wanne 115 momentan positioniert ist und im grauen Bereich 118 der Wanne 115 Material abträgt. Gezeigt sind die Schnittrichtung SR und die Vorschubrichtung VR im Auslegungspunkt AP. Beide Richtungen SR und VR verlaufen auslegungsgemäß in Lückenrichtung und damit parallel zueinander, beim konventionellen Wälzschälen insbesondere gleichsinnig zueinander parallel. Auf Grund der komplexen Relativbewegung des Wälzschälwerkzeugs 100 gegenüber dem Werkstück 50 ergeben sich Eingriffsverhältnisse und effektiven Schnittrichtungen, die sich verändern.

In den Figuren 6A bis 6C sind Abbildungen gezeigt, die den Situationen bei einem konventionellen Wälzschälverfahren mit Mehrschnittstrategie (hier mit 3 Schritten) entsprechen (die Figuren 6A - 6C sind beispielhaft für den Fall, dass der finale Schnitt so ausgelegt wurde, dass die Wälzkreise am Fußkreis des Werkstücks 50 bzw. Kopfkreis des Werkzeugs 100 liegen). Fig. 6A zeigt in schematischer Form die Wanne 115 bei 33,33% Schnitttiefe, Fig. 6B zeigt die Wanne 115 bei 66,66% Schnitttiefe und Fig. 6C zeigt die Wanne 115 beim finalen Schnitt. In Fig. 6C sind somit auch die endgültigen Flanken 53.f, 54.f und der Zahnfuß 55.f auf dem bereits bearbeiteten Abschnitt zu erkennen. Es sei angemerkt, dass die Figuren 6A bis 6C jeweils Vollschnitte zeigen, obwohl der Schneidzahn 111 beim 66,66%igen und beim finalen Schnitt nicht bis zum Schluss schneidet.

Der Materialabtrag findet im grauen Bereich 118 der Wanne 115 statt. Die Spanbildung setzt beim beispielhaft gezeigten Gegenlauf-Wälzschälen in etwa bei der Wannenmitte ein, d.h. im Bereich der Erzeugendenlinie 116 bzw. im Bereich des Übergangs von dem grauen Bereich 118 zu dem weiß dargestellten Bereich, und endet direkt am vordersten Wannenrand 84 (in Vorschubrichtung VR betrachtet)..

Anhand der Figuren 6A bis 6C ist deutlich die Änderung der Form der Erzeugendenlinie 116 von einem schrägen Verlauf in Fig. 6A über einen Z-förmigen Verlauf in Fig. 6B hin zu einem umgekehrt schrägen Verlauf in Fig. 6C zu erkennen. Ebenso haben die Simulationen ergeben, dass sich das Verhältnis der Spanungsdicken zwischen einlaufender und auslaufender Flanke immer weiter verschlechtert.

In den Figuren 7A bis 7C sind Abbildungen gezeigt, die den Situationen in den Figuren 3A bis 3C entsprechen, d.h. in den Figuren 7A bis 7C sind Abbildungen gezeigt, die die Schritte eines beispielhaften 3-Schnitt Wälzschälverfahrens der Erfindung zeigen.

Fig. 7A zeigt in schematischer Form die Wanne 115 bei 33,33% Schnitttiefe, Fig. 7B zeigt die Wanne 115 bei 66,66% Schnitttiefe und Fig. 7C zeigt die Wanne 115 beim finalen Schnitt. In Fig. 7C sind somit auch die endgültigen Flanken 53.f, 54.f und der Zahnfuß 55.f auf dem bereits bearbeiteten Abschnitt zu erkennen. Es sei angemerkt, dass die Fig. 7C der Fig. 6C entspricht, da zum besseren Vergleich ein konventionelles Wälzschälverfahren einem Wälzschälverfahren der Erfindung gegenübergestellt wurde, wobei man beispielhaft für beide Verfahren bei der Auslegung von identischen Werkstücken 50 ausgegangen ist, die mit identischen finalen Schnitten herzustellen sind.

Gemäß Erfindung wurden für den 1., 2. und den 3. Schritt jeweils andere effektive Achskreuzwinkel $\Sigma_{eff}^{i}$ rechnerisch ermittelt und durch eine Steuerung einer Wälzschälmaschine eingestellt. Die jeweiligen effektiven Achskreuzwinkel $\Sigma_{eff}^{1}$ für den 1. Schnitt , $\Sigma_{eff}^{2}$ für den 2. Schnitt und $\Sigma_{eff}^{3}$ für den 3. (finalen) Schnitt wurden so ermittelt, dass sich beim Ausführen der 1. Wälzschälbearbeitung, beim Ausführen der 2. Wälzschälbearbeitung und beim Ausführen der 3. (finalen) Wälzschälbearbeitung jeweils Erzeugendenlinien 116 ergeben, deren Form gleich oder ähnlich ist und somit zu ähnlichen Spanbedingungen führen.

Anhand der Figuren 7A bis 7C ist zu erkennen, dass durch die Anpassung des effektiven Achskreuzwinkels die Form der Erzeugendenlinie 116 gleich oder ähnlich gehalten werden konnte. Eine solche Gleichheit der Form der Erzeugendenlinie 116 in den Figuren 7A bis 7C wurde bewusst gewählt, weil sich der Effekt der Erfindung auf diesem Wege besser anschaulich vermitteln lässt. Letztlich geht es bei der vorliegenden Erfindung nicht unbedingt darum, Gleichheit bei der Form der Erzeugendenlinie 116 zu erzielen, sondern es geht darum die Spanbildungsbedingungen für einen Teil oder idealerweise für alle Schnitte zu verbessern.

Falls man bei der Umsetzung der Erfindung eine Gleichheit bei der Form der Erzeugendenlinie 116 erzielen möchte, so können zum Beispiel die jeweiligen effektiven Achskreuzwinkel (und optional auch die Neigungswinkel $\delta_i$) der einzelnen Schnitte so vorgeben werden, dass der Verlauf der Erzeugendenlinie 116 bei allen Schnitten

- monoton schräg in dieselbe Richtung verläuft, wobei vorzugsweise die Steigung gleich oder ähnlich sein sollte, oder

- Z-förmig verläuft, wobei vorzugsweise beim Z-förmigen Verlauf der Versatz der beiden äußeren Linien der Erzeugendenlinie 116 gleich oder ähnlich sein sollte.

Wie gezeigt wurde, kann durch das Anpassen der effektiven Achskreuzwinkel erreicht werden, dass der Eingriffsverlauf bei allen drei Schnitten qualitativ gleich ist, was den Spanfluss, die lokal auftretenden Kräfte und die Richtungsumkehrungen anbelangt.

Die Simulationen haben gezeigt, dass sich durch die Erfindung bezüglich der Spandicken an den ein- und auslaufenden Flanken ein sehr positiver Effekt ergibt.

Es ist auch ein Nebeneffekt des Werkzeugschwenkens, dass sich der effektive Spanwinkel ändert. Der effektive Spanwinkel wird gerade für die sehr dünnen Späne an der einlaufenden Flanke besser, was sich generell gut auf das Wälzschälverfahren auswirkt. Simulationen haben ergeben, dass der effektive Spanwinkel am Schneidenkopf 111 für nicht-finale Schnitte in der Tat gegenüber konventionellen Wälzschälverfahren verbessert werden konnte.

Im Folgenden ist der positive Effekt der Erfindung anhand konkreter Zahlenbeispielen verdeutlicht.

Statt eines ungünstigsten effektiven Spanwinkels von -20,5 Grad im 1. Schritt eines konventionellen Wälzschälverfahrens (siehe Fig. 6A), beträgt der ungünstigste effektive Spanwinkel im 1. Schritt des erfindungsgemäßen Wälzschälverfahrens (siehe Fig. 7A) -16.3 Grad. Derart negative effektive Spanwinkel treten primär im Übergangsbereich der Zahnflanken 53.v und 54.v zum Zahnfuß 55.v auf. An der einlaufenden Zahnflanke 54.v konnte der effektive Spanwinkel im 1. Schritt beispielsweise von 1,1 Grad auf 4,4 Grad verbessert werden.

Weiterhin ist zu erkennen, dass durch die Vergrößerung des Achskreuzwinkels die Wanne 115 länger wird, was sich positiv auf den Kopfspanwinkel für den ersten Schnitt auswirkt.

Durch die Erfindung verringern sich auch die effektiven Spanungsdicken bei gleichem Vorschub des Werkzeugs 100 relativ zum Werkstück 50. Entsprechend kann man in der modifizierten Ausführungsform der Erfindung mit einem höheren Vorschub bei gleicher Spanungsdicke arbeiten.

Das erfindungsgemäße Verfahren umfasst mindestens die folgenden Schritte, wobei diese Schritte nicht notwendigerweise in der angegebenen Reihenfolge ausgeführt werden müssen:

- Bereitstellen des Werkstücks 50,
- Bereitstellen des Wälzschälwerkzeugs 100, das mehrere Schneidzähne 111 aufweist,

  ▪ Vorgeben eines ersten effektiven Achskreuzwinkels $\Sigma_{eff1}$ des Wälzschälwerkzeugs 100 in Bezug zum Werkstück 50,
  ▪ Ausführen einer ersten Wälzschälbearbeitung des Werkstücks 50, wobei während der ersten Wälzschälbearbeitung das Wälzschälwerkzeug 100 bis zu einer ersten Zustelltiefe (z.B. 33,33% der endgültigen Tiefe) in das Werkstück 50 eindringt und die Flanken 53.v, 54.v der periodischen Struktur des Werkstücks 50 vorbearbeitet werden. Dieser Schritt ist beispielhaft in Fig. 3A gezeigt.
  ▪ Vorgeben eines zweiten effektiven Achskreuzwinkels $\Sigma_{eff2}$ des Wälzschälwerkzeugs 100 in Bezug zum Werkstück 50,
  ▪ Ausführen einer zweiten Wälzschälbearbeitung des Werkstücks 50, wobei während der zweiten Wälzschälbearbeitung das Wälzschälwerkzeug 100 bis zu einer endgültigen Zustelltiefe in das Werkstück 50 eindringt und die Flanken 53.f, 54.f, 55.f der periodischen Struktur des Werkstücks 50 weiter bearbeitet werden. Dieser Schritt ist beispielhaft in Fig. 3C gezeigt.

Bei dem Verfahren der Erfindung unterscheiden sich der erste effektive Achskreuzwinkel $\Sigma_{eff}^1$ und der zweite effektive Achskreuzwinkel $\Sigma_{eff}^2$, d.h. es gilt $\Sigma_{eff}^1 \neq \Sigma_{eff}^2$.

Das Eintauchen des Werkzeugs 100, respektive der Schneidzähne 111 des Werkzeugs 50, in das Material des Werkstücks 50 wird beispielsweise durch den Achsabstand a der Achsen R1 und R2 vorgegeben. Der Achsabstand für einen 1. Schnitt und für einen 2. (finalen) Schnitt kann somit gemäß einer Ausführungsform der Erfindung als gegeben angenommen werden. Gemäß Erfindung können nun beispielsweise rechnerisch ein erster effektiver Achskreuzwinkel $\Sigma_{eff}^1$ und ein zweiter effektiver Achskreuzwinkel $\Sigma_{eff}^2$ ermittelt werden. Im Rahmen dieser Ermittlung werden der erste Wälzkreisdurchmesser für die erste Wälzschälbearbeitung (d.h. für den 1. Schnitt) und der zweite Wälzkreisdurchmesser für die zweite Wälzschälbearbeitung (d.h. für den 2. Schnitt) gleichgesetzt. Dadurch, dass der Achsabstand $a^1$ für die erste Wälzschälbearbeitung und der Achsabstand $a^2$ für die zweite Wälzschälbearbeitung bekannt ist, können nun rechnerisch der erste effektive Achskreuzwinkel $\Sigma_{eff}^1$ und der zweite effektive Achskreuzwinkel $\Sigma_{eff}^2$ ermittelt werden.

Der finale Schnitt muss nicht immer so ausgelegt sein, wie in dem konkreten Ausführungsbeispiel gezeigt und beschrieben.

Für den allgemeinen Fall (Schrägverzahnung) ist der gemäß Formel in obiger Tabelle gegebene Zusammenhang zwischen Achsabstand, Wälzkreisdurchmesser und Werkzeugorientierung komplexer, aber qualitativ äquivalent, d.h. er ermöglicht die für den Spezialfall demonstrierte Vorgehensweise anhand etwas komplexerer Berechnungsformeln.

Gemäß Erfindung werden durch CNC-gesteuerte Antriebe (nicht gezeigt) während der ersten Wälzschälbearbeitung das Wälzschälwerkzeug 100 in einer ersten Drehrichtung mit der Winkelgeschwindigkeit $\omega_1$ um die Rotationsachse R1 und das Werkstück 50 in einer zweiten Drehrichtung mit der Winkelgeschwindigkeit $\omega_2$ um die Werkstück-Rotationsachse R2 gedreht. Während der ersten Wälzschälbearbeitung wird durch die CNC-gesteuerten Antriebe ein anderer effektiver Achskreuzwinkel vorgegeben als während der finalen Wälzschälbearbeitung. Eine Richtungsumkehr findet nicht statt.

Das beschriebene Wälzschälverfahren kann bei allen Ausführungsformen trocken oder nass angewendet werden, wobei die Verwendung des Wälzschälens im Trockenen bevorzugt ist.

Das Einsatzspektrum des beschriebenen Wälzschälverfahrens ist groß und erstreckt sich auf die Anwendung bei der Herstellung verschiedenster rotationssymmetrischer periodischer Strukturen.

Bezugszeichenliste:

| Stossrad | 1 |
|---|---|
| Werkstück | 2 |
| Zahnkopf | 4 |
| Zahnbrust | 5 |
| Wälzschälwerkzeug | 10 |

(fortgesetzt)

| | |
|---|---|
| (wälzgeschältes) Werkstück | 20 |
| | |
| wälzgeschältes Werkstück | 50 |
| Zahnlücke | 52 |
| linke Flanke allgemein | 53 |
| linke Flanke vorbearbeitet | 53v |
| linke Flanke fertig bearbeitet | 53f |
| rechte Flanke allgemein | 54 |
| rechte Flanke vorbearbeitet | 54v |
| rechte Flanke fertig bearbeitet | 54f |
| Zahnfuß allgemein | 55 |
| Zahnfuß fertig bearbeitet | 55f |
| Zahnfuß vorbearbeitet | 55v |
| | |
| Wälzschälwerkzeug | 100 |
| | |
| Schneidzähne / Schneidköpfe | 111 |
| Schneide | 111.1 |
| zweite Flankenschneide / linke Flankenschneide | 112 |
| erste Flankenschneide / rechte Flankenschneide | 113 |
| Kopfschneide | 114 |
| Wanne | 115 |
| Linie | 116 |
| Spanfläche | 117 |
| grauer Bereich | 118 |
| Achsabstand | $a$ |
| Achsabstand im Schritt i | $a_i$ |
| auslaufende Zahnflanke | aF |
| Auslegungspunkt | AP |
| Schrägungswinkel des Werkzeugs am Wälzkreis | $\beta_{w1}$ |
| Schrägungswinkel des Werkstücks am Wälzkreis | $\beta_{w2}$ |
| Schrägungswinkel des Werkstücks am Wälzkreisdurchmesser $d_{w2}^{i}$ | $\beta_{w2}^{i}$ |
| Schnittlinie | C1-C1 |
| Schnittlinie | C2-C2 |
| Schnittlinie | C3-C3 |
| Wälzkreisdurchmesser des Werkzeugs im Schritt i | $d_{w1}^{i}$ |

(fortgesetzt)

| Wälzkreisdurchmesser des Werkstücks im Schritt i | $d_{w2}^{i}$ |
|---|---|
| Neigungswinkel | $\delta$ |
| Neigungswinkel im Schritt i | $\delta^{i}$ |
| einlaufende Zahnflanke | eF |
| effektiver Spanwinkel | $\gamma_{s}$ |
| Schritt | i |
| Anzahl der diskreten Verfahrensschritte der Mehrschnittstrategie (ganze Zahl $\geq 2$) | k |
| Normale | N1 |
| Rotationsachse des Werkzeugs (Werkzeugachse) | R1 |
| Werkstück-Rotationsachse (Werkstückachse) | R2 |
| Hubbewegung | $S_{hx}$ |
| Axialvorschub | $S_{ax}$ |
| Differentialvorschub | $S_{D}$ |
| Radialvorschub | $S_{rad}$ |
| Schnittrichtung | SR |
| Achskreuzwinkel | $\Sigma$ |
| Achskreuzwinkel im Schritt i | $\Sigma^{i}$ |
| Erster, zweiter und k-ter Achskreuzwinkel | $\Sigma^{1}, \Sigma^{2}, \Sigma^{k}$ |
| effektiver Achskreuzwinkel | $\Sigma_{eff}$ |
| effektiver Achskreuzwinkel im Schritt i | $\Sigma_{eff}^{i}$ |
| effektiver erster, zweiter und k-ter Achskreuzwinkel | $\Sigma_{eff}^{1}, \ \Sigma_{eff}^{2}, \ \Sigma_{eff}^{k}$ |
| Übersetzungsverhältnis | u |
| Vorschubrichtung | VR |
| Betrag der Schnittgeschwindigkeit | $v_{c}$ |
| Schnittgeschwindigkeitsvektor | $\vec{v}_{c}$ |
| Geschwindigkeitsvektor Wälzschälwerkzeug | $\vec{v}_{1}$ |
| Geschwindigkeitsvektor Wälzschälwerkzeug im Schritt i | $\vec{v}_{1}^{i}$ |
| Geschwindigkeitsvektor Werkstück | $\vec{v}_{2}$ |
| Geschwindigkeitsvektor Werkstück im Schritt i | $\vec{v}_{2}^{i}$ |
| Rotationsgeschwindigkeit um die Achse R1 | $\omega_{1}$ |
| Rotationsgeschwindigkeit um die Achse R2 | $\omega_{2}$ |
| Wälzpunkt für den i-ten Schnitt | WP$^{i}$ |

**Patentansprüche**

1. Verfahren zum Wälzschälen der Zahnflanken eines Zahnrads (50) mit einer Werkstück-Rotationsachse (R2) und mit einer rotationssymmetrischen, periodischen Struktur unter Einsatz eines Wälzschälwerkzeugs (100), mit den folgenden Schritten:

- Bereitstellen des Zahnrads (50),
- Bereitstellen des Wälzschälwerkzeugs (100), das mehrere Schneidzähne (111) oder Schneideinsätze aufweist,

  ■ Vorgeben eines ersten effektiven Achskreuzwinkels $\left(\Sigma_{eff}^1\right)$ des Wälzschälwerkzeugs (100) in Bezug zum Zahnrad (50),
  ■ Ausführen einer ersten Wälzschälbearbeitung des Zahnrads (50) mit dem vorgegebenen ersten effektiven Achskreuzwinkel $\left(\Sigma_{eff}^1\right)$, wobei während der ersten Wälzschälbearbeitung das Wälzschälwerkzeug (100) bis zu einer ersten Zustelltiefe in das Zahnrad (50) eindringt und die Zahnflanken (53, 54) der periodischen Struktur des Zahnrads (50) vorbearbeitet werden,

  ■ Vorgeben eines zweiten effektiven Achskreuzwinkels $\left(\Sigma_{eff}^2\right)$ des Wälzschälwerkzeugs (100) in Bezug zum Zahnrad (50),
  ■ Ausführen einer zweiten Wälzschälbearbeitung des Zahnrads (50) mit dem vorgegebenen zweiten effektiven Achskreuzwinkel $\left(\Sigma_{eff}^2\right)$, wobei während der zweiten Wälzschälbearbeitung das Wälzschälwerkzeug (100) bis zu einer endgültigen Zustelltiefe in das Zahnrad (50) eindringt und die Zahnflanken (53, 54) der periodischen Struktur des Zahnrads (50) weiter bearbeitet werden, und

  wobei

  ■ sich der erste effektive Achskreuzwinkel $\left(\Sigma_{eff}^1\right)$ von dem zweiten effektiven Achskreuzwinkel $\left(\Sigma_{eff}^2\right)$ unterscheidet,
  ■ mit dem Verstellen des Achskreuzwinkels keine Drehrichtungsumkehr vorgenommen wird, und wobei
  ■ es sich bei dem Verfahren um ein Mehrschnitt-Completing-Verfahren handelt, bei dem rechte und linke Zahnflanken einer Lücke des Zahnrads (50) gleichzeitig bearbeitet werden.

2. Verfahren nach Anspruch 1, **dadurch gekennzeichnet, dass** der erste effektive Achskreuzwinkel $\left(\Sigma_{eff}^1\right)$ und der zweite effektive Achskreuzwinkel $\left(\Sigma_{eff}^2\right)$ so ermittelt werden, dass sich beim Ausführen der ersten Wälzschälbearbeitung und beim Ausführen der zweiten Wälzschälbearbeitung jeweils Erzeugendenlinien (116) ergeben, deren Form gleich oder ähnlich ist.

3. Verfahren nach Anspruch 1, **dadurch gekennzeichnet, dass** der erste effektive Achskreuzwinkel $\left(\Sigma_{eff}^1\right)$ und der zweite effektive Achskreuzwinkel $\left(\Sigma_{eff}^2\right)$ so ermittelt werden, dass sich beim Ausführen der ersten Wälzschälbearbeitung und beim Ausführen der zweiten Wälzschälbearbeitung jeweils Schnittbedingungen ergeben, die gleich sind.

4. Verfahren nach einem der vorhergehenden Ansprüche, **dadurch gekennzeichnet, dass** beim Ausführen der ersten Wälzschälbearbeitung und beim Ausführen der zweiten Wälzschälbearbeitung jeweils ein anderer Achsabstand (a) zwischen dem Wälzschälwerkzeug (100) und dem Zahnrad (50) oder eine andere Bearbeitungstiefe relativ zur Zahnhöhe vorgegeben wird.

5. Verfahren nach Anspruch 4, **dadurch gekennzeichnet, dass** in einem Verfahrensschritt rechnerisch eine Ermittlung des ersten effektiven Achskreuzwinkels $\left(\Sigma_{eff}^1\right)$ und des zweiten effektiven Achskreuzwinkels $\left(\Sigma_{eff}^2\right)$ vorgenommen wird, wobei im Rahmen dieser Ermittlung der erste Wälzkreisdurchmesser für die erste Wälzschälbearbeitung und der zweite Wälzkreisdurchmesser für die zweite Wälzschälbearbeitung gleichgesetzt werden, um so unter Vorgabe des Achsabstands ($a^1$) der ersten Wälzschälbearbeitung und des Achsabstands ($a^2$) der zweiten Wälzschälbearbeitung den ersten effektiven Achskreuzwinkel $\left(\Sigma_{eff}^1\right)$ und den zweiten effektiven Achskreuzwinkel $\left(\Sigma_{eff}^2\right)$ zu erhalten.

6. Verfahren nach Anspruch 4, **dadurch gekennzeichnet, dass** in einem Verfahrensschritt rechnerisch die Wälzkreislage am Wälzschälwerkzeug (100) der ersten Wälzschälbearbeitung und die Wälzkreislage am Wälzschälwerkzeug (100) der zweiten Wälzschälbearbeitung gleich gesetzt werden.

7.  Verfahren nach Anspruch 4, **dadurch gekennzeichnet, dass** in einem Verfahrensschritt rechnerisch eine Ermittlung des ersten effektiven Achskreuzwinkels $(\Sigma_{\mathit{eff}}^1)$ und des zweiten effektiven Achskreuzwinkels $(\Sigma_{\mathit{eff}}^2)$ so vorgenommen wird, dass der Eingriffsverlauf bei der ersten Wälzschälbearbeitung dem Eingriffsverlauf bei der zweiten Wälzschälbearbeitung qualitativ gleicht.

**Claims**

1.  A method for power skiving the tooth flanks of a gear (50) having a workpiece axis of rotation (R2) and a rotationally-symmetrical, periodic structure using a power skiving tool (100), having the following steps:

    - providing the gear (50),
    - providing the power skiving tool (100), which comprises multiple cutting teeth (111) or cutting inserts,

      ■ specifying a first effective intersection angle of axes $(\Sigma_{\mathit{eff}}^1)$ of the power skiving tool (100) in relation to the gear (50),
      ■ executing a first power skiving machining of the gear (50) using the specified first effective intersection angle of axes $(\Sigma_{\mathit{eff}}^1)$, wherein during the first power skiving machining, the power skiving tool (100) penetrates up to a first infeed depth into the gear (50) and the tooth flanks (53, 54) of the periodic structure of the gear (50) are premachined,

      ■ specifying a second effective intersection angle of axes $(\Sigma_{\mathit{eff}}^2)$ of the power skiving tool (100) in relation to the gear (50),
      ■ executing a second power skiving machining of the gear (50) using the specified second effective intersection angle of axes $(\Sigma_{\mathit{eff}}^2)$, wherein during the second power skiving machining, the power skiving tool (100) penetrates up to a final infeed depth into the gear (50) and the tooth flanks (53, 54) of the periodic structure of the gear (50) are further machined, and

    wherein

      ■ the first effective intersection angle of axes $(\Sigma_{\mathit{eff}}^1)$ differs from the second effective intersection angle of axes $(\Sigma_{\mathit{eff}}^2)$,
      ■ a rotational direction reversal is not performed in conjunction with the adjustment of the intersection angle of axes, and wherein
      ■ a multiple cut completing method is concerned, where the right and left tooth flanks of a gap of the gear (50) are machined simultaneously.

2.  The method according to claim 1, **characterized in that** the first effective intersection angle of axes $(\Sigma_{\mathit{eff}}^1)$ and the second effective intersection angle of axes $(\Sigma_{\mathit{eff}}^2)$ are ascertained so that, during the execution of the first power skiving machining and during the execution of the second power skiving machining, in each case generating lines (116) result, the shape of which is identical or similar.

3.  The method according to claim 1, **characterized in that** the first effective intersection angle of axes $(\Sigma_{\mathit{eff}}^1)$ and the second effective intersection angle of axes $(\Sigma_{\mathit{eff}}^2)$ are ascertained so that, during the execution of the first power skiving machining and during the execution of the second power skiving machining, cutting conditions which are identical result in each case.

4.  The method according to any one of the preceding claims, **characterized in that**, during the execution of the first power skiving machining and during the execution of the second power skiving machining, in each case a different axial distance (*a*) is specified between the power skiving tool (100) and the gear (50) or another machining depth in relation to the tooth height.

5. The method according to claim 4, **characterized in that**, in one method step, an ascertainment of the first effective intersection angle of axes $( \Sigma^1_{eff} )$ and the second effective intersection angle of axes $( \Sigma^2_{eff} )$ is computed, wherein in the scope of this ascertainment, the first pitch circle diameter for the first power skiving machining and the second pitch circle diameter for the second power skiving machining are set equal, to thus obtain, with specification of the axial distance ($a^1$) of the first power skiving machining and the axial distance ($a^2$) of the second power skiving machining, the first effective intersection angle of axes $( \Sigma^1_{eff} )$ and the second effective intersection angle of axes $( \Sigma^2_{eff} )$.

6. The method according to claim 4, **characterized in that** in one method step, the pitch circle location on the power skiving tool (100) of the first power skiving machining and the pitch circle location on the power skiving tool (100) of the second power skiving machining are set equal by computer.

7. The method according to claim 4, **characterized in that**, in one method step, an ascertainment of the first effective intersection angle of axes $( \Sigma^1_{eff} )$ and the second effective intersection angle of axes $( \Sigma^2_{eff} )$ is performed by computer so that the engagement profile during the first power skiving machining is qualitatively identical to the engagement profile during the second power skiving machining.

**Revendications**

1. Procédé pour tailler par développante les flancs de dent d'une roue dentée (50) présentant un axe de rotation de pièce à usiner (R2) et une structure périodique à symétrie de rotation en utilisant un outil de taillage par développante (100), comprenant les étapes suivantes consistant à :

    - fournir la roue dentée (50),
    - fournir l'outil de taillage par développante (100) présentant plusieurs dents coupantes (111) ou plaquettes de coupe,
    - déterminer un premier angle de croisement d'axe effectif ($\Sigma^1_{eff}$) de l'outil de taillage par développante (100) par rapport à la roue dentée (50),
    - réaliser une première taille par développante de la roue dentée (50) avec le premier angle de croisement d'axe effectif ($\Sigma^1_{eff}$) déterminé, dans lequel pendant la première taille par développante, l'outil de taillage par développante (100) pénètre dans la roue dentée (50) jusqu'à une première profondeur de passe et dans lequel il est pré-usiné les flancs de dent (53, 54) de la structure périodique de la roue dentée (50),
    - déterminer un deuxième angle de croisement d'axe effectif ($\Sigma^2_{eff}$) de l'outil de taillage par développante (100) par rapport à la roue dentée (50),
    - réaliser une deuxième taille par développante de la roue dentée (50) avec le deuxième angle de croisement d'axe effectif ($\Sigma^2_{eff}$) déterminé, dans lequel pendant la deuxième taille par développante, l'outil de taillage par développante pénètre dans la roue dentée (50) jusqu'à une profondeur de passe finale, et pendant laquelle l'usinage des flancs de dent (53, 54) de la structure périodique de la roue dentée (50) est poursuivi, et

    dans lequel

    - le premier angle de croisement d'axe effectif ($\Sigma^1_{eff}$) diffère du deuxième angle de croisement d'axe effectif ($\Sigma^2_{eff}$),
    - lors du réglage de l'angle de croisement d'axe il n'est procédé à aucune inversion du sens de rotation, et dans lequel
    - le procédé est un procédé complet à coupes multiples dans lequel les flancs de dent droit et gauche d'un entredent de la roue dentée (50) sont usinés en même temps.

2. Procédé selon la revendication 1, **caractérisé en ce que** le premier angle de croisement d'axe effectif ($\Sigma^1_{eff}$) et le deuxième angle de croisement d'axe effectif ($\Sigma^2_{eff}$) sont déterminés de sorte que, lorsqu'on réalise la première taille par développante et lorsqu'on réalise la deuxième taille par développante il en résulte à chaque fois des lignes génératrices (116) dont la forme est identique ou similaire.

3. Procédé selon la revendication 1, **caractérisé en ce que** le premier angle de croisement d'axe effectif ($\Sigma^1_{eff}$) et le deuxième angle de croisement d'axe effectif ($\Sigma^2_{eff}$) sont déterminés de sorte que, lorsqu'on réalise la première taille par développante et lorsqu'on réalise la deuxième taille par développante, il en résulte toujours des conditions de coupe identiques.

4. Procédé selon l'une des revendications précédentes, **caractérisé en ce que**, lorsqu'on réalise la première taille par développante et lorsqu'on réalise la deuxième taille par développante, il est défini une autre distance d'axe (a) entre l'outil de taillage par développante (100) et la roue dentée (50) ou une autre profondeur d'usinage par rapport à la hauteur de dent.

5. Procédé selon la revendication 4, **caractérisé en ce que**, dans une étape du procédé, il est procédé par calcul à la détermination du premier angle de croisement d'axe effectif ($\Sigma^1_{eff}$) et du deuxième angle de croisement d'axe effectif ($\Sigma^2_{eff}$), dans lequel, dans le cadre de cette détermination, le premier diamètre de cercle primitif pour la première taille par développante et le deuxième diamètre de cercle primitif pour la deuxième taille par développante sont mis sur le même plan pour ainsi obtenir, avec spécification de la distance d'axe ($a^1$) de la première taille par développante et de la distance d'axe ($a^2$) de la deuxième taille par développante, le premier angle de croisement d'axe effectif ($\Sigma^1_{eff}$) et le deuxième angle de croisement d'axe effectif ($\Sigma^2_{eff}$).

6. Procédé selon la revendication 4, **caractérisé en ce que**, dans une étape du procédé, il est mis sur le même plan par calcul la position du cercle primitif sur la pièce à usiner par taillage par développante (100) de la première taille par développante et la position du cercle primitif sur la pièce à usiner par taillage par développante (100) de la deuxième taille par développante.

7. Procédé selon la revendication 4, **caractérisé en ce que**, dans une étape du procédé, il est procédé par calcul à la détermination du premier angle de croisement d'axe effectif ($\Sigma^1_{eff}$) et du deuxième angle de croisement d'axe effectif ($\Sigma^2_{eff}$), de sorte que le déroulé de l'approche lors de la première taille par développante est qualitativement identique au déroulé de l'approche lors de la deuxième taille par développante.

**Fig. 1**

**Fig. 2A**

**Fig. 2B**

**Fig. 3A**

**Fig. 3B**

**Fig. 3C**

**Fig. 4A**

**Fig. 4B**

**Fig. 4C**

**Fig. 5**

**Fig. 6A**

**Fig. 6B**

**Fig. 6C**

Fig. 7A

Fig. 7B

Fig. 7C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014201110 A1
- DE 102008037514 A1
- EP 2596893 A1
- DE 3915976 A1